# EUROPEAN PATENT APPLICATION

(11) **EP 3 041 207 A1**
(43) Date of publication of application: **06.07.2016**
(21) Application number: 14382587.5
(22) Date of filing: 30.12.2014
(51) Int. Cl.: H04M 3/22

(54) **Method, system and computer program products for obtaining quality measurements of a telecommunications network**

(71) Applicant: Telefonica Digital España, S.L.U., 28013 Madrid (ES)
(72) Inventor: Anguera Miro, Xavier, 28013 Madrid (ES); Luque Serrano, Jordi, 28013 Madrid (ES); Targarona Pujolà, Jordi, 28013 Madrid (ES)
(74) Representative: Carlos Hernando, Borja

(57) **Abstract**

Method, system and computer program products for obtaining quality measurements of a telecommunications network relates to a computer implemented method, a system and computer programs products for obtaining quality measurements of a telecommunications network both for fixed and mobile lines. Embodiments of the present invention address these and/or other needs by providing a crowdsourced solution that besides allowing the acquisition of network-level quality measurements, obtains voice-quality measures that evaluate directly how a user/customer perceives a communication without modifying at all the normal operation of a call center.

## Description

### Field of the invention

The present invention generally relates to communication systems and methods. In particular, the invention relates to a computer implemented method, a system and computer programs products for obtaining quality measurements of a telecommunications network both for fixed and mobile lines.

### Background of the invention

All Telco companies with mobile and fixed networks need to constantly monitor the quality of the connections aiming to convey a good quality of service to their customers. Any drop in quality needs to be addressed immediately or customers will be deceived and potentially may switch to a competing offer.

For audio communications there is currently a lack of methods to effectively measure network quality in a way that it correlates with customer's satisfaction. It is possible to measure the signal that each cell phone or landline receives, and to measure whether all stations work as expected, but this does not necessary correlate with the quality of the call as perceived by the customer. For instance, the handset of a customer going through a tunnel in a train might maintain the connection with the base station, that is, the call will not be dropped while the intensity of the signal necessary to maintain the call is kept well above a minimum threshold during a certain period of time. However, often these calls cannot be successfully carried out as there are constant drops in the communication which makes the call conversation unfeasible.

Currently there are several ways in which to measure the quality of the network:
- Hardware equipment installed on the network is able to raise warnings when connections are broken or not working as expected. These alarms can be treated as an indirect measure that the quality in a certain point of the network is not optimal, even though it might not be a real alarm if the network is over-dimensioned and thus the rest of working nodes are able to cope with the traffic request, or there is currently little traffic. This measurement is usable both for the fixed and the mobile networks
- Base stations in the network can measure the signal strength of the cellphones that connect to each station. Signal strength can be linked to quality of service for the client, although this is not always accurate, as intermittent signal drops or constant base station changes might make voice communications impossible. This sort of measurements cannot be done for fixed networks until the end device, as most devices do not have the necessary hardware/software to measure and report such metrics back to the network. In the case of fixed networks signal strength can only be measured when the client has data plans and installs routers that are able to report back to the network.

- Personnel from the Telco companies usually travel around areas where measurements are needed carrying a GPS (for exact location estimation) and measurement materials to accurately estimate the signal strength of the mobile network. In this case only the quality of the network (transmitted signal) is measured, which is expected to correlate with the quality of service/quality of voice, although this is not always true. With this method accurate geolocated estimations are measured for the mobile network.
- Self-reported quality measures by customers who install an application in their mobile phones and upload the measurements into a website (e.g. www.cellumap.com).

Patent application US-A1-2009/0005097 discloses a method for automatically identifying wireless signal quality of a region. The method includes receiving signal quality information associated with wireless signals received by each of a plurality of mobile endpoints and receiving location information identifying locations of each of the plurality of mobile end points. In addition, US patent US-B2-7373152 provides a method of and system for determining radio-frequency signal strength at a mobile vehicle. A signal strength measurement request is received from a call center for a selected radio frequency, the signal strength of the selected radio frequency is measured at the mobile vehicle, and the measured signal strength is sent to the call center. Quality measures in both of these patents or patents applications are only measured for mobile networks and are taken by the user terminal. Present invention, on contrary, can obtain network quality measures from both, the fixed line and the mobile line, and takes the quality measures from the telecommunications network side, with no need for a user to have installed in his/her mobile computing device of a software application, and positions said quality measures geocalized using either CDR data (for the mobile line) or the telephone number fixed location (for the fixed line). The different measurement methods described above are able to monitor how well the network infrastructure is performing (i.e. identify faults in the network and areas of low coverage that should be corrected). However, the measurements by which these decisions are taken are always linked to the signal strength, which does not necessarily directly correlate with the perceived quality by the customers and with the intelligibility or speech clarity during the conversation.

Thinking of this problem in terms of a network service stack, the signal strength resides in a very low stack level, close to the hardware layer, while the perceived customer quality sits almost at the top level. In between of both layers there are software and hardware layers that process the signal reaching a device (either mobile or fixed) ending in a service that might not be optimal even though the necessary signal reaches the device at the lower levels.

Another shortcoming of the current measurement methods is that the quality metrics cannot be applied seamlessly both for the fixed and the mobile networks. This means that no global optimization can be performed for the whole network in terms of actual client quality of service and that the measurements cannot be usually compared.

Furthermore, with the exception of the hardware signaling alarms (only measuring faulty operation of the devices) no effective measurements are available for fixed networks. This may lead to large differences in quality of service for customers living in different geographical areas.

### Description of the Invention

Embodiments of the present invention address these and/or other needs by providing a crowdsourced solution that besides allowing the acquisition of network-level quality measurements, obtains voice-quality measures that evaluate directly how a user/customer perceives a communication without modifying at all the normal operation of a call center.

To that end, according to an embodiment there is provided a computer implemented method for obtaining quality measurements of a telecommunications network wherein a voice communication is performed through a fixed telephone line or through a mobile line over said telecommunications network between a user and a call center. The method by using a processing unit associated to the call center having one or more processors, computes one or more call quality measures from the audio signal of the user; associates the computed one or more call quality measures to a location of a geographical region in which the voice communication has been performed, and constructs a quality map of the fix or mobile telecommunications network by considering said association.

According to the invention said association comprises the use of information of the telephone number associated to the user and a time in which said voice communication was initiated. Hence, preferably, to know said user information and said exact time, for fixed telephone lines a query is made to a database of the call center storing information regarding the location of the phone number of the user used in the voice communication, alternatively, in the case of mobile lines a query is made to Call Data Record (CDR) information informing on which base station (and even what sector) the voice communication was made.

According to an embodiment, the constructed quality map is presented to another user such as a worker related with the call center. For instance, this can be done by displaying the constructed quality map on a screen of a computing device of the worker. Moreover, the presenting of the constructed quality map may also include the indication, via an automated alarm system, of network errors occurred in said geographical region. According to different embodiments, the indication of the network errors may be provided as an audible or a visual sound or even as a textual warning.

The performed voice communication may be also split, via a splitting means of the call center, in two different audio signals, one audio signal containing the user uttering and another audio signal containing the call center uttering. In addition, equalization means may also be used for equalizing/normalizing the split audio signal of the user to eliminate the variability introduced by recording equipment of the call center and/or transmission noises commonly present in voice communications.

Preferably, the one or more call quality measures include the calculation of a signal to noise ratio, the measuring of an objective speech quality, and/or the measuring of an energy/interaction based features perceived by the user, among others.

Likewise, according to an embodiment, smoothing and/or modeling algorithms are applied at the presentation/monitoring level, for instance to deal with outlier measurements obtained by error.

Other embodiments of the invention that are disclosed herein include a system configured to implement one or more aspects of the disclosed methods, as well as software programs to perform the method embodiment steps. More particularly, a computer program product is one embodiment that has a computer-readable medium including computer program instructions encoded thereon that when executed on at least one processor in a computer system causes the processor to perform the operations indicated herein as embodiments of the invention.

As already mentioned, present invention allows obtaining the same measurement for fixed and mobile networks, being able to compare the level of service customers received for both networks at any particular location. Thus it defines actions to improve either one, or to understand the customer evolution in these areas (i.e. offer them service bundles that complement the lack of service in one modality with an excellent serviced in the other).

Moreover, present invention directly measures the quality of the communication as perceived by the customers in terms of speech intelligibility and comprehensibility of the conversation, voice signal's fidelity, clearness and lack of distortion. This is true because the voice quality measure is obtained directly from the signal in the communication, and not indirectly hypothesized from the signal strength in the network. Moreover, the metrics can be measured both for outgoing and incoming calls (i.e. calls that the call center representatives receive from customers or made from the contact centers to communicate with customers) which allows for an increased coverage in geographical regions where there are not enough measurements or where the system suspects there are currently problems.

Given that this is a crowdsourced solution, and given that customers are not evenly located in the territory, present invention might sample the territory according to the density of population, giving a resolution relative to how important is each area for the business of the company. Nonetheless, if the company considers that there are some areas that are under-sampled, it can perform a push campaign where call center representatives actively call customers (or potential customers) in these areas to, for example, inquire about their needs, and thus obtaining extra quality samples.

In addition, with present invention it is possible to compare the quality of two sets of competing infrastructures (i.e. the Telco owning the call center compared to an external Telco) whenever a customer of the external Telco calls (or is called by) the call center. This is useful to measure the competitive advantage in terms of the offered quality of service in particular geographical locations, which currently cannot be obtained.

It also offers the chance to distinguish a device malfunction from the customer side. For example, whenever the speech quality perceived is below a certain threshold with respect to the average speech quality perceived, computed as the speech quality aggregated from the rest of the clients in a similar situation/location.

Finally, present invention provides a low cost solution for the Telco, as it analyses inbound calls from customers that call to report problems in the line or to contract new services. There are currently a huge volume of incoming and outgoing calls in any customer relationship center, which could be transformed into quality measurements with virtually no cost for the Telco in terms of data acquisition.

### Brief Description of the Drawings

The previous and other advantages and features will be more fully understood from the following detailed description of embodiments, with reference to the attached, which must be considered in an illustrative and non-limiting manner, in which:
Fig. 1 is a diagram that shows an embodiment of a method for obtaining quality measurements of a telecommunications network in accordance with present invention.
Fig. 2 is an illustration showing a system for obtaining quality measurements of a telecommunications network in accordance with different embodiments of the present invention. In dashed lines are showed those elements of the system which are optional for implementing the teachings of present invention.

### Detailed Description of the invention and of Several Embodiments

Present invention defines a set of quality measures that are applied directly to the performed voice calls 11 from a user(s) 10 into a call center 200. The invention uses the voice calls 11 that users 10 (or customers) make to call centers 200 (as well as the voice calls 11 that call center representatives make to users 10) to measure the perceived voice quality of the communication. Both the income (users 10 to call center 200) and the outcome (call center 200 to user 10) voice calls 11 are performed for reasons other than to measure quality. The measurement of quality does not involve any modification to the voice call 11 or the interaction with the user 10 and is measured passively from the audio in the voice call 11 either online or from pre-recorded calls.

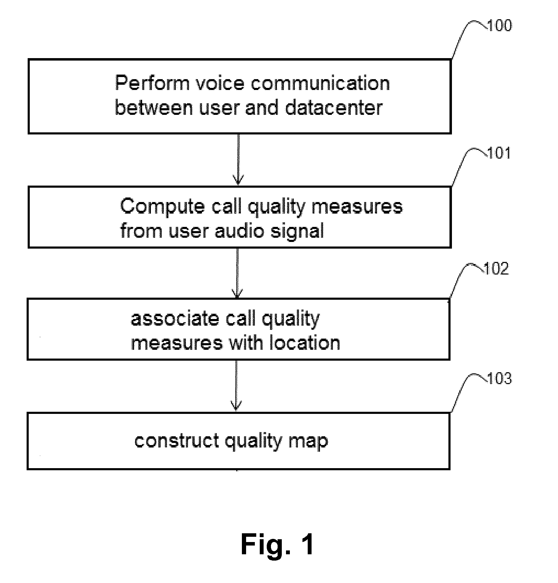

According to the embodiment of Fig. 1, a user 10 calls, step 100, (or is called by) the company call center number and performs their business. The voice call 11, as informed to the user 10, usually gets recorded for quality monitoring purposes. Each voice call 11 is then processed individually and can be analyzed while the voice call 11 is being made (online), i.e. the voice call 11 is not stored in a database 201 of the call center 200, or after the voice call 11 is finished (offline), i.e. the voice call 11 is stored in the database 201.

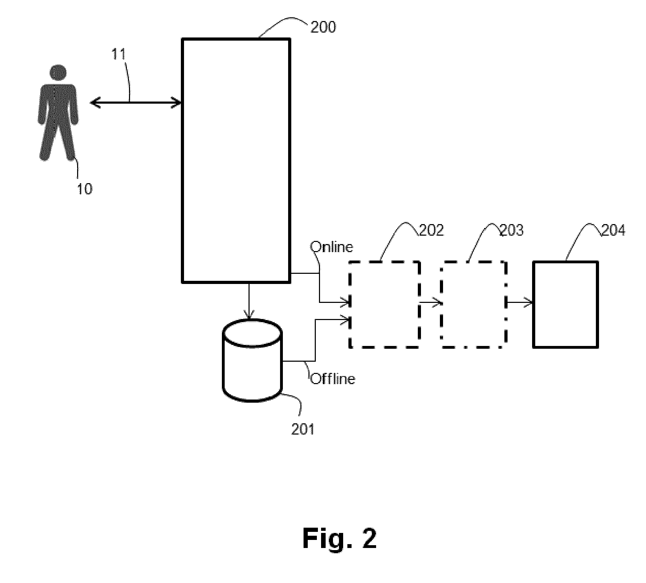

According to this particular embodiment, the voice call 11 is analyzed online. Hence, while the voice call 11 is performed, quality measurements thereof are computed, step 101, by a processing unit 204 associated to the call center 200 as can be seen in Fig. 2, from the audio signal of the user 10. The computed quality measurements are then associated, step 102, to a location of a geographical region in which the voice communication 11 has been performed to construct, step 103, a quality map of the fix or mobile telecommunications network.

In order to geographically position the computed quality measurements, i.e. to perform said association step 102, the proposed method uses the information of the telephone number of the user 10 and the exact time in which the voice call 11 is made. For fixed telephone lines a query is made to databases of the call center 200 that can locate existing clients in a latitude/longitude position while preserving their privacy. In the case of mobile phone numbers, access to the exact time of the voice call 11 allows the method to query Call Data Records (CDR) information to find what base station (and even what sector) the voice call 11 was made from. In addition, geographically nearby regions measures could be also aggregated in order to smooth and average the computed quality measures among different voice calls.

The one or several call quality measurements may be computed by any of the following processes, among others, alone or in combination thereof: Signal-to-Noise Ratio (SNR); the measuring of an objective speech quality and/or the measuring of an energy/interaction based features perceived by the user 10. Direct speech signal measurements can objectively measure the speech quality of the user 10 side to indicate how the speech signal travels through the telecommunications network and is perceived in the call center 200 premises (which is equivalent to how the user representative speech will be perceived by the user 10 at his location). On the other hand, interaction and energy measures can estimate how well the communication goes, indicating whether the quality of the speech is enough to have a successful interaction.

SNR (or other similar metrics) look just at the short-term power of the signal and compare the speech parts to the noisy parts to compute how separate they are, and therefore how distinctive the audio is from the background noise. This measure is very fast to compute and usually only needs an estimation of the noise regions (non-speech regions). On another hand, objective speech quality can be measured with a multiplicity of algorithms developed explicitly for this purpose. For example, PESQ (Perceptual Evaluation of Speech Quality) defines a set of standards and a test methodology for automated assessment of the speech quality as experienced by a user of a telephone system (Standard ITU-T recommendation P.862). These algorithms have been developed to highly correlate with human speech quality assessment tests (defined in ITU-T P.800). A good review of some of these algorithms can be found in [2, 3]. Finally, energy/interaction based features is an alternative way to measure the quality of the voice communication as perceived by the user 10. It is based on the observation that interaction patterns and sudden changes in energy or in pitch can be linked to problems in the communication (for example one party not hearing the other).

The constructed quality map may be also presented to a worker related to the call center 200 (that may be different to the worker that has maintained the voice call, e.g. a communication specialist). The presentation can be done by displaying the constructed quality map on a screen of a computing device, via an automated alarm system that reports consistent network problems in geographical regions or even by combination of both (i.e. displaying and indication of network problems).

According to the embodiment of Fig. 2, before the processing unit 204 computes the call quality measurements, an in order to improve the processing of the voice call 11, the voice call 11 may be split, by splitting means 202, into two channels, the user side and the agent side, where the agent side usually will have a much better quality recording in comparison to the user side. While in some call center 200 recording equipment this is done automatically, in some other circumstances this is not possible, and only one channel is available where the speech from agent and user 200 are mixed together. In such case present invention preferably uses, not limitative as any other similar technology may also be used, a technology called speaker diarization [1] to split the audio into user and agent segments. Such technology can achieve error rates as low as 1% for two-people telephone conversations, thus obtaining a signal quite similar to the case where two signals are available separately.

Next, present invention can also perform an equalization/normalization, by using equalization means 203, of any type, of the user signal to eliminate the variability introduced by the call center 200 recording equipment and/or transmission noises common to all voice calls in each call center 200. This step helps homogenize signals recorded in multiple call centers 200 as users might be assigned to one call center 200 or the other according to reasons different than geographical, which would lead to biases in the measured qualities for the same geographic region between call centers 200. Same approach should be taken into consideration in order to equalize/normalize the variability introduced by the user's phone device, especially in the case of the mobile network and due to the huge variety of mobile phones and its broad range of performances.

The call center equalization 203 may be performed by obtaining a common transformation from all voice calls incoming/outgoing that call center 200 or by using the audio recorded in the same voice call 11 from the agent, whose speech is much clearer but also affected by call-center particularities. Next, the one or more call quality measurements can be objectively measured by the processing unit 204 from the equalized audio of the user 10 based on the above described computing processes, e.g. by the measuring of an objective speech quality.

According to other embodiments at the presentation/monitoring level, smoothing and modeling algorithms can also be applied to the sampled signals to deal with outlier measurements obtained by error or in very particular circumstances.

The constructed quality map can be split into fixed and mobile networks, or also combined to see which users have good/bad quality of service in either communication method. The quality map can also be combined with information about the penetration in each of the areas or the most-contracted services to try to understand users decisions given the quality obtained in these locations.

Present invention may be of particular relevance in the following scenarios. For instance, an operator/worker in the network monitoring unit is interested in receiving alarms in his email or via SMS when certain areas in the territory experience quality problems that should be addressed. These alarms can be obtained by combining the measurements obtained in this method with the measurements obtained via hardware devices signaling, or other methods. He can then call for action to solve the problems before users/clients start feeling unhappy about the service. Moreover, marketing professionals can use the service to compare the quality of service of the company versus the quality offered by other operators in certain areas, and create particular offerings specialized for regions in the territory to take advantages of the competitive advantage of their telecommunications network (or to offer bundles of services when one of the services is not very good).

While the foregoing is directed to embodiments of the present invention, other and further embodiments of the invention may be devised without departing from the basic scope thereof. For example, other aspects may be implemented in hardware or software or in a combination of hardware and software.

Additionally, the software programs included as part of the invention may be embodied in a computer program product that includes a computer useable medium. For example, such a computer usable medium can include a readable memory device, such as a hard drive device, a flash memory device, a CD-ROM, a DVD/ROM, or a computer diskette, having computer readable program code segments stored thereon. The computer readable medium can also include a communications link, either optical, wired, or wireless, having program code segments carried thereon as digital or analog signals.

The scope of the present invention is determined by the claims that follow.

### References:

[1] Anguera, X., Bozonnet, S., Evans, N., Fredouille, C., Friedland, G., & Vinyals, O. (2012). Speaker diarization: A review of recent research. Audio, Speech, and Language Processing, IEEE Transactions on, 20(2), 356-370.
[2] Hu, Y., & Loizou, P. C. (2008). Evaluation of objective quality measures for speech enhancement. Audio, Speech, and Language Processing, IEEE Transactions on, 16(1), 229-238.
[3] Hall, T. A. (2001, July). Objective speech quality measures for Internet telephony. In ITCom 2001: International Symposium on the Convergence of IT and Communications (pp. 128-136). International Society for Optics and Photonics.

## Claims

1. A computer implemented method for obtaining quality measurements of a telecommunications network, wherein at least one voice communication (11) is performed through a fixed telephone line or through a mobile line over said telecommunications network between at least one user (10) and a call center (200), the method comprising using a processor of a processing unit (204) associated to the call center (200) performing following steps:
- computing one or more call quality measures from the audio signal of the user (10);
- associating the computed one or more call quality measures to a location of a geographical region in which the voice communication (11) has been performed, said association comprising using information of the telephone number associated to the user (10) and/or a time in which said voice communication (11) was initiated; and
- constructing a quality map of the fix or mobile telecommunications network by considering said association.

2. The method of claim 1, comprising to know the information of the telephone number associated to the user (10) and the time in which the voice communication (11) was initiated:
- querying a database storing information regarding the user (10) if the voice communication (11) being performed through the fixed telephony line; or
- querying a Call Data Record information informing at least on which base station the voice communication (11) was made if the voice communication (11) being performed through the mobile line.

3. The method of previous claims, further comprising presenting the constructed quality map to another user.

4. The method of claim 3, wherein the presenting being performed by displaying the constructed quality map on a screen of a computing device of said another user.

5. The method of previous claims 3 or 4, wherein the presenting further comprises indicating, via an automated alarm system, network errors in said geographical region.

6. The method of claim 1, wherein the performed voice communication (11) is split, by a splitting means (202), in two different audio signals, one audio signal containing the user (10) uttering and another audio signal containing the call center (200) uttering.

7. The method of claim 6, comprising equalizing/normalizing, by equalization means (203), the split audio signal of the user (10) to eliminate the variability introduced by recording equipment of the call center (200) and/or transmission noises commonly present in voice communications.

8. The method of claim 1 or 7, wherein said call quality measures at least including one of: the calculation of a signal to noise ratio; the measuring of an objective speech quality; and/or the measuring of an energy/interaction based features perceived by the user (100).

9. A system for obtaining quality measurements of a telecommunications network, comprising:
- a computer device of a user (10); and
- a call center (200),
said user (10) and said call center (200) performing a voice communication (11) through a fixed telephone line or through a mobile line over a telecommunications network,
the system further comprising a processing unit (204) associated to the call center (200) including at least one processor running an algorithm for:
- computing one or more quality measures from the audio signal of the user (10);
- associating the computed one or more call quality measures to a location of a geographical region in which the voice communication (11) has been performed; and
- constructing a quality map of the fix or mobile telecommunications network by considering said association,
wherein said association comprises using information of the telephone number associated to the user (10) and a time in which said voice communication (11) was initiated.

10. The system of claim 9, further comprising means configured for presenting the constructed quality map to another user.

11. The system of claim 9 or 10, comprising splitting means (202) configured for splitting the performed voice communication (11) in two different audio signals, one audio signal containing the user (10) uttering and another audio signal containing the call center (200) uttering;

12. The system of claim 11, further comprising equalization means (203) configured for equalize/normalize the split audio signal of the user (10).

13. The system of claim 9, comprising a database (201) associated to the call center (200) for storing the performed voice communication (11).

14. A computer program product comprising executable instructions that, when executed by one or more processors of a computer system, cause the computer system to perform the method of any one of the preceding claims 1 to 8.
